# EUROPEAN PATENT SPECIFICATION

(11) **EP 2 669 208 B1**
(45) Date of publication and mention of the grant of the patent: **29.07.2015**
(21) Application number: 12169683.5
(22) Date of filing: 28.05.2012
(51) Int. Cl.: B65D 6/26

(54) **A clamp**
Klemme
Pince

(43) Date of publication of application: 04.12.2013
(73) Proprietor: NEFAB AB, 550 02 Jönköping (SE)
(72) Inventor: Eding, Pontus, 828 31 EDSBYN (SE)
(74) Representative: Olsson, Jan

(56) References cited:
- WO-A1-92/21574
- GB-A- 2 257 453
- US-A- 4 461 395

## Description

### TECHNICAL FIELD OF THE INVENTION AND BACKGROUND ART

The present invention relates to a clamp for interconnecting two plate-like members according to the preamble of claim 1.

Clamps of this type are usually used for interconnecting a number of plate-like members, which may be arranged tightly against each other, for forming a container for packaging purposes. Thus, in such a case said plate-like members are walls, a bottom or a lid of a container. In the case of interconnecting six such plate-like members to each other a container having a parallelepipedic shape may be obtained. It is conceivable to have all or only some of said plate-like members of a container interconnected by clamps of the type defined above. It is possible to interconnect two such plate-like members by only one clamp or several such clamps. Said member of the clamp for engaging a part of a said plate-like member may be of any type, such as male or female and the part to engage of said plate-like member may also be of any type, such as a hole in the plate-like member, a groove therein or a projection formed by an element attached to said plate-like member.

A clamp of this type is known for example through US 4 461 395 A.

Clamps of this type are preferably used for creating containers by interconnecting plate-like members therethrough, and when the container has been used for the transport of objects, the clamps may be unlocked and the plate-like members may be separated for getting disposed of or being sent back as a substantially flat package. Thus, it is of course desired to have a clamp of this type being easy to handle for interconnecting and disconnecting plate-like members and obtaining a reliable interconnection thereof.

US 4 461 395 A describes such a clamp (clip) described in the introduction with an opening suitable for introducing a tool member therein for removing the clamp from a box-like container. To remove this clamp a bar, such as a screwdriver, may be inserted through the opening and wedged between the clamp and a bearing plate, which is glued to the box-like container in a position underneath the opening of the clamp when the clamp is arranged at the box-like container, to protect an outer surface of the container from damage that could be caused by the end of the screwdriver during removal of the clamp. The solution of protecting the outer surfaces of the box-like container by means of such bearing plates results in several negative consequences of the use of such clamps. There is therefore a need of such a clamp described which may be used without the negative consequences addressed above.

### SUMMARY OF THE INVENTION

The object of the present invention is to provide a clamp of the type described in the preamble of claim 1 being improved in at least some aspect with respect to such clamps previously known.

This object is obtained by providing the clamp according to claim 1.

With a clamp including this feature the problems with the clamp in US 4 461 395 A adressed above are solved. When the end of an elongated tool member, such as a screwdriver, is introduced in the opening in a direction from said transition the end of the tool member will find support on the surface of the opening defining member in question which surface is suitably configured for this purpose and the tool member may further find support by leg portions in the region of the transition while urging the two legs apart for obtaining said removal. This means that it is ensured that the tool member will not act upon any part of the plate-like member in question, which eliminates the need of providing this plate-like member with reinforcing parts to reduce the risk of damaging the plate-like member with the end of the tool member.

According to an embodiment of the invention said opening defining member is formed in one piece with said leg by a portion of leg material bent out from surrounding leg material portions, which results in low manufacturing costs of the clamp and a reliable function thereof.

According to another embodiment of the invention said clamp is made of one single flat material piece bent in said transition of one leg to the other, and the clamp is according to another embodiment of the invention made of metal, and in a further preferred embodiment of spring steel. Spring steel is a suitable material for this type of clamp, since it provides the resiliency needed and is able to withstand rather tough handling of for instance a container being loaded or unloaded. However, other materials than metal, such as plastic, for the clamp are possible.

According to another embodiment of the invention said two legs make an angle of 87°-60°, 85°-60°, 80°-60° or 80°-70° in said rest state of a minimum of potential energy stored. Such an angle in said rest state results in a substantial difference in shape of said clamp in the interconnecting state with respect to the rest state and a significantly difference in potential energy stored in the two states for reliably keeping the clamp in said interconnecting state once obtained.

According to another embodiment of the invention said engagement member is a male member, and this male member is according to a further development of this embodiment formed by an end of said leg projecting from adjacent leg portions while making an angle of approximately 90°, such as 80°-100°, therewith. Having an engagement member in the form of a male member at the outer end of each clamp leg makes it possible to omit unnecessary projections on said plate-like members, which instead may be provided with female members in the form of grooves or holes for engagement with said male members.

According to another embodiment of the invention said opening is located close to said outer end of said leg, such as at a distance thereto being less than 1/3, less than 1/4, less than 1/5 or less than 1/6 of the distance to the transition of that leg to the other leg. Such a location of said opening results in a favourable lever when acting upon the clamp through said opening for removing the clamp from said interconnecting state making such removal easy.

According to another embodiment of the invention both legs of the clamp have a said opening, so that the one easiest to reach may be used for disconnecting the clamp from two plate-like members interconnected thereby.

The invention also relates to a container with at least a bottom and four walls interconnected while together forming substantially rectangular corners of the container, in which at least adjacent walls of said container are interconnected by at least one clamp according to the present invention.

Further advantages as well as advantageous features of the invention will appear from the following description.

### BRIEF DESCRIPTION OF THE DRAWINGS

With reference to the appended drawings, below follows a specific description of a clamp according to an embodiment of the invention cited as an example.

In the drawings:
- Fig 1: is a side-elevation view of a clamp according to an embodiment of the invention in a rest position of a minimum of potential energy stored thereby,
- Fig 2: is a perspective view of the clamp shown in Fig 1,
- Fig 3: is a cross-section view of the clamp according to Fig 1 in a state in which it interconnects two plate-like members,
- Fig 4: is a view illustrating how to remove a clamp from the interconnecting state shown in Fig 3, and
- Fig 5: is a perspective view of a container having all six delimiting walls interconnected by means of clamps according to the present invention.

### DETAILED DESCRIPTION OF AN EMBODIMENT OF THE INVENTION

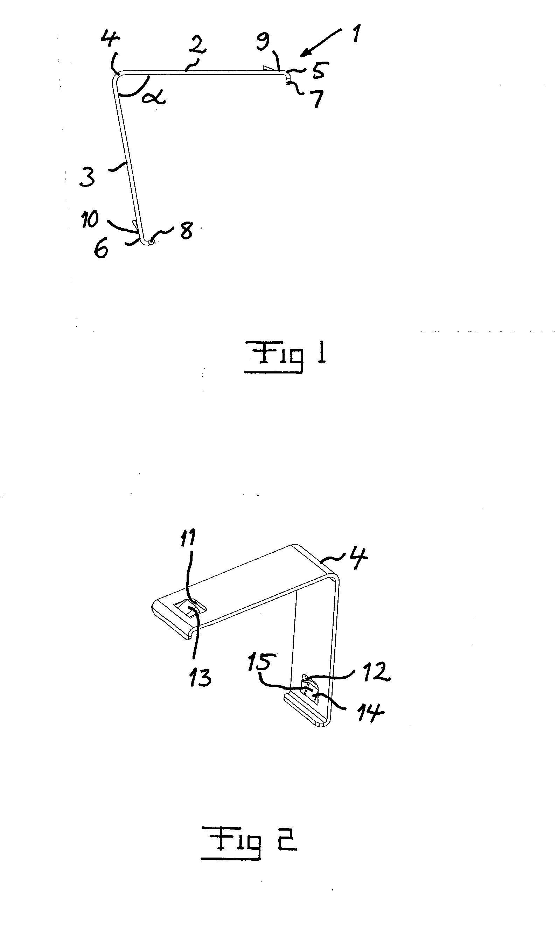

A clamp 1 according to the present invention for interconnecting two plate-like members so as to make them together form a substantially rectangular corner is illustrated in side-elevation in Fig 1 and in a perspective view in Fig 2 in a rest state of a minimum of potential energy stored therein. This clamp is designed to interconnect two plate-like members while forming a container, i.e. a bottom, walls and/or a lid of a container. The clamp has two identical legs 2, 3 resiliently connected to each other, which is obtained by manufacturing the clamp of spring steel. Accordingly, a flat spring steel member has been treated to a bent shape for forming said two legs with a transition 4 interconnecting them. The two legs make in the rest position of the clamp shown in Fig 1 and 2 an angle a with respect to each other being less than 90°, here approximately 80°.

Each leg has at an outer end 5, 6 thereof remote to said transition 4 a member 7, 8 configured to engage a part of a said plate-like member in a state of interconnecting two said plate-like members. The engagement members are here of the male type and formed by projections making an angle of approximately 90° with respect to adjacent leg portions 9, 10.

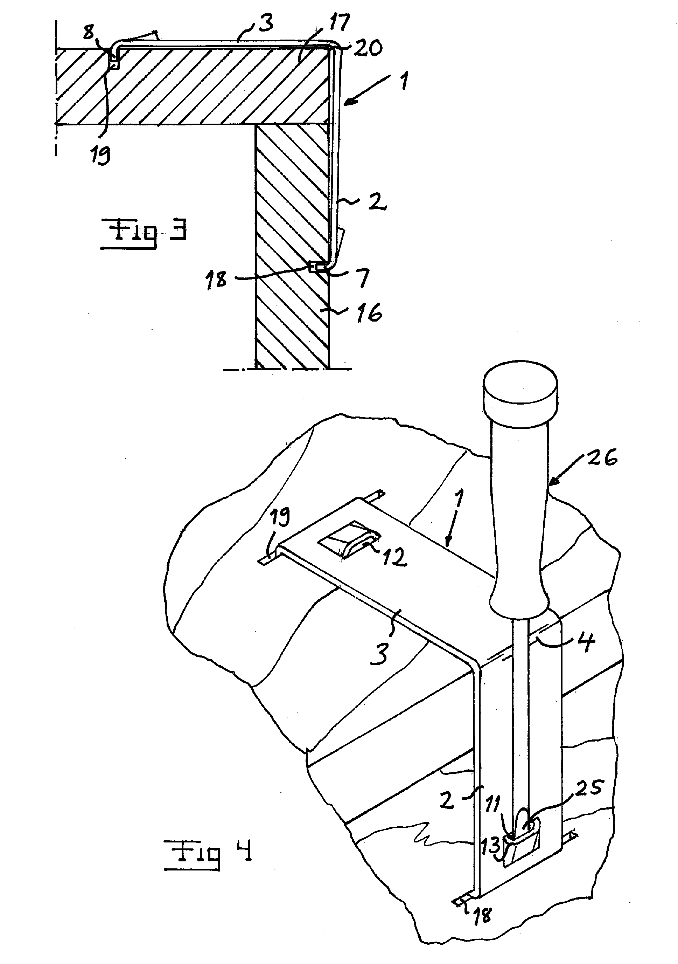

Each leg is provided with an opening 11, 12 designed to receive an end of an elongated tool member in said interconnecting state of the clamp for enabling removal of said clamp in said interconnecting state from said plate-like members, which will be disclosed further below while making reference to Figs 3 and 4. The opening 11, 12 is defined by a member 13, 14 extending out from surrounding portions of the respective leg in the direction towards the transition 4, and this member is formed in one piece with said leg by a portion of leg material bent out from surrounding leg material portions 9, 10. Each such member 13, 14 has a surface 15 diverging from said surrounding leg portions so as to provide support for an end of a said tool member, and this surface makes an angle with respect to said surrounding leg portions of approximately 15° in the embodiment shown. Thus, the surface is configured to be directed towards the plate-like member this leg bears against in the interconnecting state of the clamp.

The function of the clamp shown in Fig 1 and 2 will now be explained while making reference to Figs 3 and 4. The clamp is brought into a state in which it interconnects two plate-like members 16, 17 so as to make them together form a substantially rectangular corner by introducing the engagement member 7 of one leg 2 into a female member 18, here a groove, in one plate-like member and then urging the other leg 3 apart from the leg 2 while storing potential energy in said clamp and introducing the engagement member 8 of that leg into a female member 19 in the form of a groove in the plate-like member 17. This is easily obtained by pushing the leg 2 close to said transition 4 towards the plate-like member 16. This means that the clamp has been brought into the interconnecting state shown in Fig 3, in which the clamp extends around a said corner 20 while storing more potential energy than in said rest state and along an outer surface of the plate-like members. Thus, the clamp will efficiently hold the plate-like members together, since the legs will act towards the mutual position thereof shown in Fig 1.

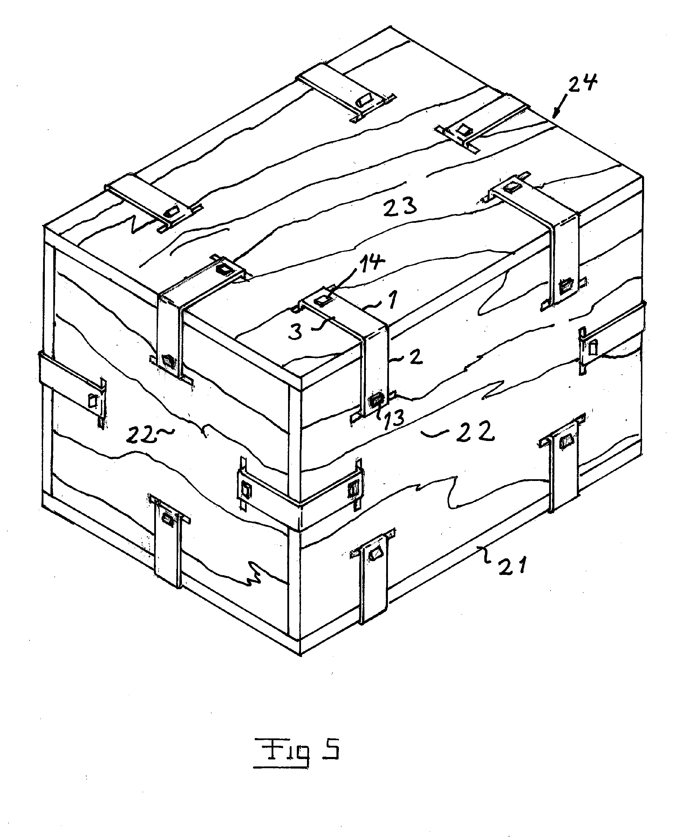

It is shown in Fig 5 how a bottom 21, four walls 22 and a lid 23 of a container 24 may be hold together by use of clamps 1 according to the invention as illustrated in Fig 3. The container is here made of plywood, but any other suitable material is conceivable, such as metal or plastic.

It is illustrated in Fig 4 how a said clamp may be efficiently removed from the interlocking state shown in Fig 3 and Fig 5 without any risk of negative influence upon any plate-like member so as to open a container or disassemble a container for sending the plate-like members thereof further as a flat package. This is obtained by introducing the end 25 of a tool member 26, such as an ordinary screwdriver, into one of the openings 11, 12 of the clamp and urging the engagement member 7, 8 closest to this opening out of engagement with said part (here a groove) of the plate-like member. The end of the tool member will then find support on the surface 15 of the opening defining member 13, 14 in question and thanks to the fact that the opening is directed towards said transition 4 of the legs to each other the tool member may find support by leg portions in the region of the transition 4 while urging the two legs apart for obtaining said removal. This means that it is ensured that the tool member will not act upon any part of the plate-like member in question. It appears that such a removal may be very easy to carry out and obtained in seconds.

The invention is of course not in any way restricted to the embodiment described above, but many possibilities to modifications thereof would be apparent to a person with ordinary skill in the art without departing from the scope of the invention as defined in the appended claims.

The two legs of the clamp may have different dimensions, and it is possible that only one of them is provided with a said opening.

It is also possible to have female engage members at the ends of the legs co-operating with male engagement members on plate-like members.

Said opening of at least one clamp leg has not to extend through that leg, but it may be formed by a cavity with a bottom made in said leg.

## Claims

1. A clamp (1) for interconnecting two plate-like members (16, 17) so as to make them together form a substantially rectangular corner (20), said clamp having two legs (2, 3) resiliently connected to each other, making an angle being less than 90° with each other in a rest state of the clamp and being in a state of interconnecting said plate-like members configured to extend around a said corner while storing more potential energy than in said rest state and be located along an outer surface of the plate-like members, each leg having at an outer end (5, 6) thereof remote to a transition (4) to the other leg a member (7, 8) configured to engage a part (18, 19) of a said plate-like member in said interconnecting state, wherein at least one of said legs is provided with an opening (11, 12) designed to receive an end of an elongated tool member in said interconnecting state of the clamp for enabling removal of said clamp in said interconnecting state from said plate-like members by influencing that leg in the direction apart from the other leg and by that moving said engagement member (7, 8) out of engagement with said part of the plate-like member, said opening (11, 12) being directed towards said transition (4) of the legs (2, 3) to each other so as to enable support of said tool member by leg portions in the region of said transition while urging the two legs apart for obtaining said removal, the clamp (1) further comprising a member (13, 14) defining said opening and extending out from surrounding portions (9, 10) of said leg in the direction towards said transition (4), **characterized in that** said opening defining member (13, 14) has a surface (15) thereof diverging from said surrounding leg portions (9, 10) and providing support for an end of a said tool member, such that said tool member will not act upon any part of the plate-like member when the clamp is being removed, and that said surface (15) of said opening defining member (13, 14) makes an angle with respect to said surrounding leg portions (9, 10) of 5°-30°.

2. A clamp according to claim 1, **characterized in that** said opening defining member (13, 14) is formed in one piece with said leg by a portion of leg material bent out from surrounding leg material portions (9, 10).

3. A clamp according to claim 1 or 2, **characterized in that** said clamp is made of one single flat material piece bent in said transition (4) of one leg to the other.

4. A clamp according to any of the preceding claims, **characterized in that** it is made of metal.

5. A clamp according to claim 4, **characterized in that** is made of spring steel.

6. A clamp according to any of the preceding claims, **characterized in that** said two legs (2, 3) make an angle of 87°-60°, 85°-60°, 80°-60° or 80°-70° in said rest state of a minimum of potential energy stored.

7. A clamp according to any of the preceding claims, **characterized in that** said engagement member (7, 8) is a male member.

8. A clamp according to claim 7, **characterized in that** said male member (7, 8) is formed by an end of said leg (2, 3) projecting from adjacent leg portions (9, 10) while making an angle of approximately 90°, such as 80°-100°, therewith.

9. A clamp according to any of the preceding claims, **characterized in that** said opening (11, 12) is located close to said outer end (5, 6) of said leg, such as at a distance thereto being less than 1/3, less than 1/4, less than 1/5 or less than 1/6 of the distance to the transition (4) of that leg to the other leg.

10. A clamp according to any of the preceding claims, **characterized in that** both legs (2, 3) have a said opening (11, 12).

11. A container (24) with at least a bottom (21) and four walls (22) interconnected while together forming substantially rectangular corners of the container, **characterized in that** at least adjacent walls of said container are interconnected by at least one clamp (1) according to any of claims 1-10.

## Patentansprüche

1. Klemme (1) zum Verbinden zweier plattenartiger Körper (16, 17), so daß sie zusammen eine im wesentlichen rechtwinklige Ecke (20) bilden, wobei die Klemme zwei Schenkel (2, 3) aufweist, die federnd miteinander verbunden sind, einen Winkel von weniger als 90 ° miteinander in einem Ruhezustand der Klemme bilden und in einem Verbindungszustand der plattenartigen Körper so gestaltet sind, daß sie sich rund um eine Ecke erstrecken, wobei sie mehr potentiell Energie speichern als in dem besagten Ruhezustand und längs einer äußeren Oberfläche der plattenartigen Körper angeordnet sind, wobei des weiteren jeder Schenkel ein äußeres Schenkelende (5, 6) aufweist, das von einem Übergang (4) zu dem anderen Schenkel entfernt liegt und einen Körper (7, 8) bildet, der so gestaltet ist, daß er mit einem Teil (18, 19) des plattenartigen Körpers im Verbindungszustand in Eingriff steht, wobei wenigstens einer der Schenkel mit einer Öffnung (11, 12) versehen ist, die so gestaltet ist, daß sie ein Ende eines langgestreckten Werkzeugkörpers in dem genannten Verbindungszustand der Klemme aufnehmen kann, um das Entfernen der Klemme im Verbindungszustand von den plattenartigen Körpern dadurch zu ermöglichen, daß auf einem Schenkel in Richtung von dem anderen Schenkel weg eingewirkt wird und daß der Eingriffskörper (7, 8) mit dem Teil des plattenartigen Körpers außer Eingriff gebracht wird, wobei des weiteren die Öffnungen (11, 12), die in Richtung des Übergangs (4) der Schenkel (2, 3) gegeneinander gerichtet sind, so daß ein Werkzeugkörper durch die Schenkelteile im Bereich des Übergangs abgestützt werden kann, und die beiden Schenkel, um das Entfernen der Klemme zu erreichen, auseinandergedrückt werden, und des weiteren die Klemme (1) einen Körper (13, 14) aufweist, der die Öffnung bildet und sich von den umgebenden Teilen (9, 10) des Schenkels in Richtung auf den Übergang (4) erstreckt, **dadurch gekennzeichnet, daß** der die Öffnung bildende Körper (13, 14) eine Oberfläche (15) aufweist, die von den umgebenden Schenkelteilen (9, 10) abweicht und für ein Ende des genannten Werkzeugkörpers eine Abstützung bildet, derart, daß der Werkzeugkörper nicht auf irgendein Teil des plattenartigen Körpers wirkt, wenn die Klemme entfernt wird, und daß die Oberfläche (15) des die genannte Öffnung bildenden Körpers (13, 14) in Bezug auf die umgebenden Schenkelteile (9, 10) einen Winkel von 5 ° bis 30 ° einschließt.

2. Klemme nach Anspruch 1, **dadurch gekennzeichnet, daß** der die Öffnung bildende Körper (13, 14) in einem Stück geformt ist, und zwar mit dem Schenkel durch ein Teil des Schenkelmaterials, das aus dem die Schenkelmaterial umgebenden Teilen (9, 10) herausgebogen ist.

3. Klemme nach Anspruch 1 oder 2, **dadurch gekennzeichnet, daß** die Klemme aus einem einzelnen flachen Materialstück hergestellt ist, das im Übergang (4) des einen Schenkels zu dem anderen gebogen ist.

4. Klemme nach irgendeinem der vorhergehenden Ansprüche, **dadurch gekennzeichnet, daß** sie aus Metall gefertigt ist.

5. Klemme nach Anspruch 4, **dadurch gekennzeichnet, daß** sie aus Federstahl gefertigt ist.

6. Klemme nach einem der vorhergehenden Ansprüche, **dadurch gekennzeichnet, daß** die beiden Schenkel (2, 3) im Ruhezustand, wenn die gespeicherte potentielle Energie ein Minimum beträgt, einen Winkel von 87 ° bis 60 °, 85 ° bis 60 °, 80 ° bis 60 ° oder 80 ° bis 70 ° einschließen.

7. Klemme nach einem der vorhergehenden Ansprüche, **dadurch gekennzeichnet, daß** der Eingriffskörper (7, 8) ein patrizenförmiger Körper ist.

8. Klemme nach Anspruch 7, **dadurch gekennzeichnet, daß** der patrizenförmige Körper (7, 8) durch ein Ende des Schenkels (2, 3) gebildet wird, das von den benachbarten Schenkelteilen (9, 10) vorsteht, wobei mit diesen ein Winkel von annähernd 90 °, beispielsweise 80 ° - 100 ° gebildet wird.

9. Klemme nach einem der vorhergehenden Ansprüche, **dadurch gekennzeichnet, daß** die Öffnung (11, 12) nahe an dem äußeren Ende (5, 6) des Schenkels angeordnet ist, so daß der Abstand dazu weniger als 1 / 3, weniger als 1 / 4, weniger als 1 / 5 oder weniger als 1 / 6 des Abstandes des Übergangs (4) des Schenkels zu dem anderen Schenkel beträgt.

10. Klemme nach einem der vorhergehenden Ansprüche, **dadurch gekennzeichnet, daß** beide Schenkel (2, 3) eine besagte Öffnung (11, 12) aufweisen.

11. Behälter (24) mit wenigstens einem Boden (21) und vier Wänden (22), die miteinander verbunden sind, wobei sie zusammen im wesentlichen rechwinklige Ecken des Behälters bilden, **dadurch gekennzeichnet, daß** wenigstens benachbarte Wände des Behälters durch wenigstens eine Klemme (1) gemäß irgendeinem der Ansprüche 1 bis 10 verbunden sind.

## Revendications

1. Pince (1) pour relier deux éléments (16, 17) semblables à une plaque pour faire qu'ils forment ensemble un coin (20) sensiblement rectangulaire, la pince ayant deux jambages (2, 3) reliés élastiquement l'un à l'autre, faisant un angle de moins de 90° l'un avec l'autre dans un état de repos de la pince et étant, dans un état de liaison des deux éléments semblables à une plaque, configurés pour s'étendre autour du coin, tout en emmagasinant plus d'énergie potentielle que dans l'état de repos et étant placés sur une surface extérieure des éléments semblables à une plaque, chaque jambage ayant à son extrémité (5,6) extérieure, éloignée d'une transition (4) vers l'autre jambage un élément (7, 8) configuré pour coopérer avec une partie (18, 19) de l'élément semblable à une plaque à l'état de liaison, au moins l'un des jambages étant pourvu d'une ouverture (11, 12) conçue pour recevoir une extrémité d'un élément d'outil oblong dans l'état de liaison de la pince, pour permettre de retirer la pince dans l'état de liaison des éléments semblables à une plaque en influant sur ce jambage dans la direction le séparant de l'autre jambage et par cela en mettant l'élément (7, 8) de coopération hors de coopération avec la partie de l'élément ressemblant à une plaque, l'ouverture (11, 12) étant dirigée en direction de la transition (4) des jambages (2, 3) l'un vers l'autre de manière à permettre de supporter l'élément d'outil par les parties de jambage dans la région de la transition, tout en tendant à séparer les deux jambages pour obtenir le retrait, la pince (1) comprenant en outre un élément (13, 14) définissant l'ouverture et s'étendant hors des parties (9, 10) environnantes du jambage dans la direction allant vers la transition (4), **caractérisée en ce que** l'élément (13, 14) définissant l'ouverture a une surface (15) qui diverge des parties (9, 10) de jambage environnantes et qui ménage un support pour une extrémité de l'élément d'outil de manière à ce que l'élément d'outil n'agira pas sur une partie quelconque de l'élément ressemblant à une plaque lorsque la pince est retirée et **en ce que** la surface (15) de l'élément (13, 14) définissant l'ouverture fait un angle de 5° à 30° avec les parties (9, 10) de jambage environnantes.

2. Pince suivant la revendication 1, **caractérisée en ce que** l'élément (13, 14) définissant une ouverture est formée d'une pièce avec le jambage par une partie du matériau du jambage courbée hors des parties (9, 10) environnantes de matériau de jambage.

3. Pince suivant la revendication 1, **caractérisée en ce que** la pince est faite d'une pièce unique de matériau plat, courbée dans la transition (4) d'un jambage à l'autre.

4. Pince suivant l'une quelconque des revendications précédentes, **caractérisée en ce qu'**elle est faite en métal (5).

5. Pince suivant la revendication 4, **caractérisée en ce qu'**elle est faite en acier pour ressort.

6. Pince suivant l'une quelconque des revendications précédentes, **caractérisée en ce que** les deux jambages (2, 3) font un angle de 87° à 60°, de 85° à 60°, de 80° à 60° ou de 80° à 70° dans l'état de repos d'un minimum d'énergie potentielle emmagasinée.

7. Pince suivant l'une quelconque des revendications précédentes, dans lequel l'élément (7, 8) de coopération est un élément mâle.

8. Pince suivant la revendication 7, **caractérisée en ce que** l'élément (7, 8) mâle est formé par une extrémité du jambage (2, 3) faisant saillie de parties (9, 10) de jambage voisines, tout en faisant un angle avec elles d'environ 90°, tel que de 80° à 100°.

9. Pince suivant l'une quelconque des revendications précédentes, **caractérisée en ce que** l'ouverture (11, 12) est placée près de l'extrémité (5, 6) extérieure du jambage, tel qu'à une distance de celle-ci inférieure à 1/3, inférieure à 1/4, inférieure à 1/5 ou inférieure à 1/6 de la distance à la transition de ce jambage à l'autre jambage.

10. Pince suivant l'une quelconque des revendications précédentes, **caractérisée en ce que** les deux jambages (2, 3) ont l'ouverture (11, 12).

11. Conteneur (24) ayant au moins un fond (21) et quatre parois (22) reliées tout en formant ensemble des coins sensiblement rectangulaires du conteneur, **caractérisé en ce qu'**au moins des parois voisines du conteneur sont reliées par au moins une pince (1) suivant l'une quelconque des revendications 1 à 10.
